# EUROPÄISCHE PATENTSCHRIFT

(11) **EP 3 836 777 B1**
(45) Veröffentlichungstag und Bekanntmachung des Hinweises auf die Patenterteilung: **28.02.2024**
(21) Anmeldenummer: 19752466.3
(22) Anmeldetag: 06.08.2019
(51) Int. Cl.: A01G 27/02, A01G 13/02

(54) **PFLANZVORRICHTUNG**
DEVICE FOR PLANT
DISPOSITIF POUR PLANTES

(30) Priorität: 13.08.2018 DE 102018119631
(43) Veröffentlichungstag der Anmeldung: 23.06.2021
(73) Patentinhaber: Plattner, Wolfgang, 85247 Schwabhausen (DE)
(72) Erfinder: Plattner, Wolfgang, 85247 Schwabhausen (DE)
(74) Vertreter: Meissner Bolte Partnerschaft mbB
(86) Internationale Anmeldenummer: PCT/EP2019/071065
(87) Internationale Veröffentlichungsnummer: WO 2020/035347

(56) Entgegenhaltungen:
- WO-A1-99/46974
- DE-A1- 2 623 117
- DE-A1-102013 112 980
- US-A- 3 095 670
- US-A1- 2014 075 841

## Beschreibung

Die Erfindung betrifft ein Pflanzsystem nach Anspruch 1. Pflanzen werden üblicherweise in genormten Kulturtöpfen mit einer oder mehreren Bewässerungs- und Wurzelwachstumsöffnung(en), die auch als Kulturtopfschlitze bezeichnet werden, kultiviert und vermarktet. Kulturtöpfe sind für eine optimale Versorgung der Pflanzen mit Wasser und Nährstoffen konzipiert, bieten der Pflanze Halt und sind in der Regel in Höhe und Durchmesser genormt. Hydrokulturpflanzen werden meist im Kulturtopf auf dem Boden eines wasserdichten Gefäßes gesetzt, und mit Tongranulat (Blähton) gefüllt. Am Boden der wasserdichten Gefäße für Hydrokulturen steht weiter ein Wasserstandsanzeiger, der beim Gießen die entsprechende Wasserstandshöhe anzeigt. Erdpflanzen werden üblicherweise in ihrem Kulturtopf belassen und in einen Übertopf gestellt oder in ein Erdbewässerungssystem unter Verwendung von Pflanzsubstraten gepflanzt. Derzeit müssen neu bepflanzte Hydrokulturpflanzen je nach Kulturtopfgröße und Pflanzgefäßgröße in einem Gießzeitraum von 5 bis 21 Tagen gegossen werden, Erdpflanzen im Übertopf ohne Bewässerungssystem in einem Gießzeitraum von 1 bis 7 Tagen bzw. in einem Erdbewässerungssystem in einem Gießzeitraum von 2 bis 6 Wochen mit Wasser oder wässriger Nährlösung versorgt werden.

Nachteilig ist eine Verwendung von Pflanzsubstraten für Bepflanzungen in Gefäßen, da sich bei Wachstum der Pflanzen mit vermehrter Wurzelbildung die Substrate derart verdichten, bis zu wenig Luft im Wurzelbereich vorhanden ist. Nachteilig bei allen derzeitig verwendeten Pflanzsystemen ist, dass der Pflanzenballen und die Wurzeln der Pflanzen regelmäßig über einen längeren Zeitraum direkt im Wasser stehen. Nachteilig ist außerdem, dass sich anfänglich beim Gießen der Pflanzen regelmäßig Schwemmstoffe des verwendeten Substrates freisetzen und vorhandene Oberflächenverunreinigungen (Staub etc.) eingeschwemmt werden, die sich am Gefäßboden ablagern und die Wurzelverdichtungen zusätzlich beschleunigen. Auch eventuell verwendeter formstabiler Langzeitdünger in Granulatform, der beim Gießen eingeschwemmt wird, lagert sich am Gefäßboden und zwischen den Wurzeln der Pflanzen ab. Diese Ablagerungen verschließen zusätzlich die Wurzelwachstums- und Bewässerungsöffnungen der Kulturtöpfe von Hydrokulturpflanzen, die Öffnungen der Vegetationsdrainagen von Erdbewässerungssystemen und auch Öffnungen von Wasserstandsanzeigern im Bodenbereich, die zur Messung des vorhandenen Wasserstandes notwendig sind. Jede Art von Verdichtung der Pflanzsubstrate in Form von Wurzeln oder Ablagerungen verringert die Luftzufuhr im Wurzelbereich. Diese Verdichtungen führen unweigerlich zum Absterben und zur Fäulnisbildung der Wurzeln, wodurch sich der Verdichtungsprozess kontinuierlich vom Bodenbereich nach oben fortsetzt und immer größer wird. Dies führt oftmals zu einem flächigen Ausfall der Begrünungen. Aufgrund der Wurzelverdichtungen sind betroffene kaputte oder kranke Pflanzflächen sehr schwer und aufwendig aus den verwendeten Gefäßen zu entfernen, da sich die Wurzeln oft zusätzlich mit den Gefäßinnenwänden verbinden. Nachteilig ist auch, dass die Wurzelverdichtungen bei Verwendung von Pflanzsubstraten oft so stark sind, dass diese durch ihre Kraft die verwendeten Pflanzgefäße entformen oder auch sprengen. Nachteilig ist auch, dass bei allen Pflanzsystemen die Oberflächen der Pflanzflächen komplett geöffnet sind, was zu einer verstärkten Verdunstung des gespeicherten Wassers über diese Flächen führt und so den Wasserverbrauch dieser Begrünungen erheblich vermehrt. Zudem verringert sich der ursprüngliche Wasserspeicher in den Pflanzsystemen durch die Verwendung von Pflanzsubstraten und zunehmender Wurzelverdichtung erheblich, wodurch sich auch die Gießintervalle entsprechend schnell reduzieren.

Daher besteht ein Bedarf, vorhandene Pflanzsysteme, insbesondere mit Blick auf den Wasserverbrauch, die Verwendung von Pflanzsubstraten, die Wasserversorgung, der Wurzelbelüftung und den Wurzelverdichtungen, zu verbessern.

Die großflächige Versiegelung von Flächen durch Bebauung mit Gebäuden, Wegen und Straßen ist verantwortlich für die Reduzierung von Grünflächen in Städten und Gemeinden. Diese Grünflächenreduzierzungen sind mitverantwortlich für eine Erhöhung der Temperaturen, die Reduzierung von Sauerstoffbildung, die reduzierte Bindung von Feinstaub und darin enthaltener Schadstoffe, die Zerstörung unseres Bioklimas und von Lebensräumen für Insekten, Bienen, Schmetterlingen, Vögeln und vielen weiteren Tierarten. Flächen ohne Erde, wie Wüsten oder Felslandschaften werden durch das Abholzen von Wäldern immer größer und beschleunigen mit unseren zusätzlichen Umweltbelastungen zunehmend den vorhandenen Klimawandel. Mit massiven Neubegrünungen von versiegelten Flächen in unseren Städten, der Begrünung von Wüsten, Felslandschaften und Flächen ohne Erde können wir ab sofort dem Klimawandel entgegenwirken und neue Flächen mit gesunder Luft zum Atmen für uns und unsere Kinder bei geringstem Wasserverbrauch nachhaltig schaffen.

Wichtig ist dabei, dass diese Begrünungen funktionell, möglichst schnell und einfach durchgeführt werden können. Wichtig ist auch, dass für diese Begrünungen alle Pflanzen gemäß den vorhandenen Klimabedingungen verwendet werden können.

WO 99/46974 A1 und US 3 095 670 A veranschaulichen ein Beispiel für eine Pflanzvorrichtung und US 2014/075841 A1 und DE 26 23 117 A1 illustrieren ein Beispiel für ein Pflanzsystem.

Eine Aufgabe der Erfindung ist es, ein Pflanzsystem umfassend mindestens eine erste und eine zweite Pflanzvorrichtung bereitzustellen, mit welcher bzw. welchem versiegelte Flächen oder Flächen ohne vorhandener Erde, nachhaltig, schnell und einfach mit allen Pflanzen begrünt werden können.

Eine Aufgabe der vorliegenden Erfindung besteht darin, ein Pflanzsystem bereitzustellen, bei der bzw. dem zum Bepflanzen auf Pflanzsubstrate außerhalb des Kulturtopfes verzichtet wird und welche bzw. welches Wurzelverdichtungen und Wurzelfäulnis verhindert.

Eine Aufgabe der Erfindung ist, den Wasserverbrauch für Begrünungen um bis zu 80% gegenüber allen vorhandenen Pflanzsystemen zu reduzieren.

In Pflanzvorrichtung und Pflanzsystem soll von selbst ein optimaler Wasserstand vorherrschen, so dass der Wasserstand nicht ständig kontrolliert und nachjustiert werden muss.

Eine weitere Aufgabe der Erfindung ist es, ein Pflanzsystem bereitzustellen, in dem Pflanzen einzeln oder auch punktuell selbst nach Jahren schnell, einfach und mit geringstem Aufwand ausgetauscht werden können.

Zudem sollen Pflanzvorrichtung und Pflanzsystem eine möglichst geringe Menge an Wasser verbrauchen. Erstrebenswert ist gar ein autarkes Pflanzsystem, in welchem Regenwasser gesammelt, gespeichert und den Pflanzen zugeführt wird. Durch Erfüllung mehrerer dieser Aufgaben soll auch eine kostengünstige Pflanzvorrichtung und ein kostengünstiges Pflanzsystem bereitgestellt werden.

Hinsichtlich des Pflanzsystems wird mindestens eine dieser Aufgaben durch den Gegenstand des Patentanspruches 1 gelöst. Bevorzugt wird mindestens eine dieser Aufgaben dadurch gelöst, dass die Pflanzvorrichtung ein Wasserbecken zum Aufnehmen und Bereitstellen von Wasser mit einem Boden und einem Mantel umfasst. Ferner umfasst die Pflanzvorrichtung ein Wasser-Überlaufsystem zum Einstellen eines Wasserstandes in dem Wasserbecken derart, dass höchstens 9/10 des Wasserbeckens mit Wasser befüllt ist. Ferner umfasst die Pflanzvorrichtung einen Kulturtopf zur Aufnahme von Substrat und einer Pflanze, wobei der Kulturtopf mindestens einen Boden und einen Mantel umfasst, wobei der Mantel und/oder der Boden zumindest teilweise perforiert ist bzw. sind. Ferner umfasst die Pflanzvorrichtung eine Abdeckung, die an oder im Wasserbecken derart gehaltert ist, dass sich im Inneren des Wasserbeckens ein atmosphärischer Bereich ausbildet. Gekennzeichnet ist die Pflanzvorrichtung ferner durch eine Halteeinrichtung, die den Kulturtopf an dem Mantel des Wasserbeckens derart befestigt und/oder gegenüber dem Boden des Wasserbeckens derart abstützt, dass der Boden des Kulturtopfes deutlich, insbesondere mindestens 3 cm, vom Boden des Wasserbeckens beabstandet ist.

Der Kulturtopf kann eine oder mehrere Pflanzen enthalten.

In bestimmten Ausführungsformen ist der Kulturtopf ein Pflanzkorb zur Aufnahme von Substrat und mehreren Pflanzen, wobei der Pflanzkorb mindestens einen Boden und Mantel umfasst, wobei der Mantel und/oder Boden teilweise oder komplett perforiert ist bzw. sind.

In bestimmten Ausführungsformen ist der Kulturtopf als Netz ausgebildet, welches über Stützelemente, insbesondere vertikale Streben und einen Boden, gehalten wird.

Im Rahmen dieser Patentanmeldung kann als Wasser auch eine wässrige Nährstofflösung oder eine wasserhaltige Nährstofflösung oder ein mit Nährstoffen versetztes Wasser verstanden werden.

Es ist möglich, dass im Wasserbecken der Pflanzvorrichtung Brackwasser oder Flusswasser oder Regenwasser zur Wasserversorgung dient. In diesem Fall ist es möglich, dass die Pflanzvorrichtung eine Reinigungsvorrichtung aufweist, die das Brackwasser oder Flusswasser oder Regenwasser reinigt, bevor es in das Wasserbecken transportiert wird.

Mit Hilfe der erfindungsgemäßen Pflanzvorrichtung kann ein Wasserkreislauf gebildet werden, sodass Wasserressourcen geschont werden.

Unter dem Begriff Substrat soll ein anorganisches poröses Träger- oder Nährmedium, wie beispielsweise Blähton, Tongranulat oder Terraton, zum Halt, zur Wurzelbildung, zur Wurzelbelüftung, zur Bewässerung und Nährstoffversorgung von Hydrokulturpflanzen oder ein organisches Substrat wie Erde, Mutterboden aber auch für die jeweilige Pflanzenart verwendete Spezial-Erden mit angereicherten Nährstoffgemischen und Spurenelementen verstanden werden.

Erfindungsgemäß kann das Wasserbecken gemauert sein und/oder aus Beton gebildet sein. Mit anderen Worten kann es sich bei dem Wasserbecken um eine Art Betonwanne und/oder Steinwanne handeln. Es ist möglich, dass der Boden und der Mantel des Wasserbeckens zumindest abschnittsweise aus Stein und/oder Beton gebildet sind.

In dem Wasserbecken, insbesondere in einem Wasserbecken, das aus Beton oder Stein gebildet ist, kann eine Vielzahl von Kulturtöpfen angeordnet sein.

Das Wasserbecken und der Kulturtopf können verschiedene Formen ausbilden.

Darunter fallen insbesondere Formen wie Zylinder, Würfel, Quader oder jede andere beliebige Form. Der Kulturtopf befindet sich bevorzugt innerhalb des Wasserbeckens, d.h. zwischen Boden, Mantel und Abdichtung des Wasserbeckens, und ist in seinen Maßen dem Wasserbecken angepasst. Bevorzugt füllt der Kulturtopf das Volumen des Wasserbeckens zu 5 bis 90 % aus.

Das Wasserbecken wird nach unten durch den Boden und zu den Seiten durch den Mantel begrenzt. Nach oben wird das Wasserbecken zumindest teilweise durch die Abdeckung begrenzt bzw. abgeschlossen.

Die Abdeckung verhindert in bestimmten Ausführungsformen, dass Oberflächenverunreinigungen in den Kulturtopf und/oder das Wasserbecken eingetragen werden.

Der Kulturtopf wird nach unten durch den Boden und zu den Seiten durch den Mantel begrenzt. Der Mantel selber wird nach unten durch den Boden und nach oben durch einen oberen Rand begrenzt.

Unter dem Begriff atmosphärischer Bereich soll ein Raum mit einer herabgesetzten Luftwechselrate mit der Umwelt verstanden werden, in dem ein für das Pflanzenwachstum ideales Wachstumsklima mit hoher Luftfeuchtigkeit entstehen kann und bei dem eine ungehinderte Verdunstung von Wasser oder wässriger Nährlösung über die Oberfläche reduziert bis ausgeschlossen wird. Der atmosphärische Bereich wird von der Umwelt entkoppelt, wodurch die Luftwechselrate zwischen atmosphärischem Bereich und Umwelt herabgesetzt wird. Ein Luftaustausch mit der Umwelt ist in bestimmten Ausführungsformen im Wesentlichen nur durch das Substrat und ein oder mehrere Öffnungen in der Abdeckung hindurch möglich. Der abgeschlossene atmosphärische Bereich zwischen Wasserstand und Abdeckung bildet gemeinsam mit dem Wasser zwischen dem Boden des Wasserbeckens und dem Wasserstand einen Vegetationsraum. Der Aufbau der Pflanzvorrichtung sorgt zum einen für ein gutes Wachstumsklima im Vegetationsraum und im atmosphärischen Bereich mit einer hohen Luftfeuchtigkeit, und zum anderen verhindert es ungehindertes Verdunsten von Wasser oder wässriger Nährlösung aus dem Vegetationsraum nach außen.

Erfindungsgemäß ist die Abdeckung des Pflanzsystems als Regenwasserkollektor ausgebildet. Die Abdeckung kann Elemente aufweisen um Regenwasser zu sammeln. Die Elemente, die das Regenwasser sammeln, können in Fluidverbindung mit einem Wasservorratsbehälter und/oder einer Zisterne stehen. Mit Hilfe der erfindungsgemäßen Pflanzvorrichtung kann ein natürlicher Wasserkreislauf gebildet werden, sodass Wasserressourcen geschont werden.

Aufgrund der Abdeckung kann im Pflanzsystem ein Feuchtraum bzw. ein atmosphärischer Bereich gebildet werden. Aufgrund des Feuchtraums bzw. des atmosphärischen Bereichs wird im Vergleich zu konventionellen Pflanzsystemen eine geringere Menge von Pflanzerde und/oder Granulat benötigt. Mit Hilfe des erfindungsgemäßen Pflanzsystems kann somit ein erheblicher Anteil an Pflanzerde und/oder Granulat eingespart werden.

Die Pflanzvorrichtung umfasst eine Halteeinrichtung, die den Kulturtopf an dem Mantel des Wasserbeckens derart befestigt und/oder gegenüber dem Boden des Wasserbeckens derart abstützt, dass der Boden des Kulturtopfes deutlich vom Boden des Wasserbeckens beabstandet ist. Dabei handelt es sich bei der Abdeckung und der Halteeinrichtung bevorzugt um zwei unterschiedliche Elemente. Je nach Ausführungsform bedeutet deutlich mindestens 3 cm, mindestens 5 cm, mindestens 10 cm, mindestens 20 cm, mindestens 25 cm oder mindestens 50 cm. In bestimmten Ausführungsformen bedeutet deutlich, dass der Abstand zwischen dem Boden des Kulturtopfes und dem Boden des Wasserbeckens, bezogen auf die Höhe des Wasserbeckens, 3 % bis 90 % beträgt.

Perforiert bedeutet, dass Mantel und/oder Boden mit Durchgängen versehen sind, die bevorzugt einen Durchmesser von 1 mm bis 10 cm aufweisen. Diese Durchgänge sind bevorzugt mit jeweils einem Sieb oder Flies versehen, um zu verhindern, dass Substrat in das Wasserbecken fällt. Durch die Durchgänge können Wurzeln wachsen und es findet ein Luft-, Wasser-, und Nährstoffaustausch zwischen Substrat bzw. Wurzeln in dem Kulturtopf und dem Vegetationsraum statt. Ferner wird durch die Durchgänge Gewicht und Material eingespart, sowie für eine perfekte Wurzelbelüftung gesorgt. Die Pflanzenwurzeln können durch den zumindest teilweise perforierten Mantel und/oder Boden in das Wasser wachsen. Zwischen dem Boden des Wasserbeckens und dem Boden des Kulturtopfes können sich somit Nährstoffwurzeln ausbreiten. Da hier weder Substrat noch Kulturtopfmaterial vorliegt, kann es zu keiner Wurzelverdichtung oder Substratverdichtung kommen. Je nach Wahl des Abstandes zwischen dem Boden des Kulturtopfes und dem Boden des Wasserbeckens sowie des maximalen Wasserstandes können die Bedingungen in der Pflanzvorrichtung an die Erfordernisse der Pflanze angepasst werden. Da die Wurzeln hauptsächlich außerhalb des Kulturtopfes wachsen, werden Wurzelverdichtungen im Bereich des Kulturtopfes vermieden, und eine daraus resultierende Wurzelfäulnis ausgeschlossen. Die Vitalität der Pflanzen wird dadurch nachhaltig verbessert, und die Haltbarkeit maßgeblich erhöht. Durch die Vermeidung der Wurzelverdichtung sowie der Substratverdichtung kann es auch nicht zu Rissbildungen in dem Kulturtopf oder dem Wasserbecken kommen.

Das Wasser verbleibt nach dem Verdampfen größtenteils unter der Abdeckung und lagert sich beim Verdunsten an der Unterfläche der Abdeckung sowie an dem Mantel des Kulturtopfes und des Wasserbeckens ab und tropft bzw. läuft wieder in das Wasserbecken. Der Wasserverbrauch kann gegenüber herkömmlichen Pflanzsystemen nachhaltig um bis zu 80 % reduziert und sonst notwendige Gießintervalle wesentlich verlängert werden. Gießperioden, beispielsweise für "Mietpflanz-Konzepte", können wesentlich verlängert werden. Dies spart Personal und/oder Verwaltungskosten.

Das Wasser-Überlaufsystem kann aus einem einfachen Rohr bestehen, das Wasser aus dem Wasserbecken abführt, sobald das Wasser in dem Wasserbecken, gemessen vom Boden des Wasserbeckens, auf eine bestimmte Höhe, den maximalen Wasserstand, angestiegen ist. Das Rohr kann in horizontaler oder vertikaler Ausrichtung in dem Wasserbecken angebracht sein. Das Wasser-Überlaufsystem führt das Wasser bevorzugt in eine andere Pflanzvorrichtung oder einen Wasservorratsbehälter. Denkbar ist auch eine Sickergrube oder die Kanalisation. In bestimmten Ausführungsformen ist das Wasser-Überlaufsystem zum Einstellen eines Wasserstandes in dem Wasserbecken derart ausgelegt, dass, bezogen auf die Höhe des Wasserbeckens, höchstens 9/10, 8/10, 7/10, 6/10, 5/10, 4/10, 3/10, 2/10, 1/10, 1/15 oder 1/20, bevorzugt 13 cm, des Wasserbeckens mit Wasser befüllt ist. Durch das Wasser-Überlaufsystem wird von selbst ein optimaler, maximaler Wasserstand eingestellt, so dass der Wasserstand nicht ständig kontrolliert und nachjustiert werden muss.

In einer möglichen Ausführungsform der Erfindung ist das Wasser-Überlaufsystem mit einem Wasservorratsbehälter und/oder einer Zisterne verbunden. Überschüssiges Wasser der Pflanzvorrichtung kann mittels des Wasser-Überlaufsystems in einen Wasservorratsbehälter und/oder eine Zisterne transportiert werden.

Des Weiteren ist es möglich, dass Wasser von dem Wasservorratsbehälter und/oder der Zisterne in das Wasserbecken transportiert werden kann. Hierzu kann eine Zulaufvorrichtung ausgebildet sein, die eine Fluidverbindung zwischen dem Wasservorratsbehälter und/oder der Zisterne und dem Wasserbecken herstellt.

Sofern im Wasserbecken ein zu geringer Wasserpegel vorliegt kann Wasser von dem Wasservorratsbehälter und/oder der Zisterne in das Wasserbecken transportiert werden.

In dem Wasservorratsbehälter und/oder der Zisterne können Graualgen befindlich sein. Das Wasser im Wasservorratsbehälter und/oder der Zisterne kann mit Hilfe der Graualgen gereinigt werden. Das gereinigte Wasser kann ausgehend vom Wasservorratsbehälter und/oder von der Zisterne in einen weiteren, insbesondere anderen, Wasserkreislauf transportiert werden. In dem weiteren, insbesondere anderen, Wasserkreislauf kann das gereinigte Wasser als Brauch- oder Trinkwasser verwendet werden.

Mit Hilfe der erfindungsgemäßen Pflanzvorrichtung kann ein natürlicher Wasserkreislauf gebildet werden, sodass Wasserressourcen geschont werden.

Mit Hilfe der erfindungsgemäßen Pflanzvorrichtung kann einfach und leicht ein Wurzelverjüngungsschnitt der Nährstoffwurzeln durchgeführt werden, da sich im Bereich der Nährstoffwurzeln keinerlei Füllmaterial befindet. Ein Wurzelverjüngungsschnitt stärkt die Vitalität der Pflanzen.

Die Pflanzvorrichtung ist geeignet für alle Bodenbereiche, insbesondere auch Bodenbereiche, in denen eigentlich kein Erdreich für Pflanzenwachstum vorhanden ist, das heißt, Bodenbereiche aus Stein, Bodenbereiche in der Wüste oder versiegelte Bodenbereiche.

In bestimmten Ausführungsformen besteht der unterhalb der Abdeckung liegende Vegetationsraum im Wesentlichen nur aus Luft und Wasser. Im Falle eines notwendig werdenden Ersetzens einer Pflanze kann der Kulturtopf mit Pflanze sehr einfach ausgetauscht werden. Der wesentliche Vorteil besteht darin, dass nicht die komplette Pflanzvorrichtung entleert oder ausgetauscht werden muss.

Das Wasser bleibt klar, sauber und geruchsneutral, ohne biologisch umzukippen. Ein ganz wesentlicher Vorteil ist die optimale Luftzufuhr im Wurzelbereich. Zusammenfassend können so übliche und nötige Umpflanzungen in größere Gefäße auf Dauer entfallen.

Vorteilhafte Weiterbildungen der Erfindung sind in den Unteransprüchen angegeben.

In bestimmten Ausführungsformen weist das Wasserbecken eine Länge von 0,5 m bis 4,0 m, bevorzugt 1,0 m bis 2,75 m, und/oder eine Breite von 0,2 m bis 4,0 m, bevorzugt 0,5 m bis 2,75 m, und/oder eine Höhe von 10 cm bis 3,0 m, bevorzugt 0,25 m bis 2,75 m, auf.

In bestimmten Ausführungsformen weist das Wasserbecken eine quaderförmige Form mit einer Länge von 0,5 m bis 4,0 m, bevorzugt 1,0 m bis 2,75 m, und/oder eine Breite von 0,2 m bis 4,0 m, bevorzugt 0,5 m bis 2,75 m, und/oder eine Höhe von 10 cm bis 3,0 m, bevorzugt 0,25 m bis 2,75 m, auf.

In bestimmten Ausführungsformen weist das Wasserbecken eine zylindrische Form mit einem Durchmesser von 0,3 m bis 4,0 m, bevorzugt 0,5 m bis 2,75 m, und/oder einer Höhe von 0,3 m bis 4,0 m, bevorzugt 0,5 m bis 1,5 m, auf.

Das Wasserbecken kann in jeder beliebigen Form und Größe passend zum Anspruch der Umgebung, Architektur und Größe der gewählten Pflanzen gefertigt werden.

In bestimmten Ausführungsformen weist der Mantel des Wasserbeckens mindestens einen Spant, bevorzugt zwei bis fünf Spanten, auf. Bevorzugt erstreckt sich der mindestens eine Spant im Wesentlichen horizontal entlang des Innenumfangs des Mantels des Wasserbeckens. Mehrere Spanten sind bevorzugt durch vertikale Verbindungsstücke, insbesondere Stangen, verbunden.

In bestimmten Ausführungsformen weist der Kulturtopf eine Länge von 0,1 m bis 4,0 m, bevorzugt 0,2 m bis 2,75 m, und/oder eine Breite von 0,2 m bis 4,0 m, bevorzugt 1,0 m bis 2,75 m, und/oder eine Höhe von 8 cm bis 3,0 m, bevorzugt 0,14 m bis 2,75 m, auf.

In einer Ausführungsform hat der Kulturtopf ein Innenvolumen, das mindestens 5%, insbesondere mindestens 10% kleiner ist als das Innenvolumen des Wasserbeckens.

In bestimmten Ausführungsformen weist der Kulturtopf eine quaderförmige Form mit einer Länge von 0,1 m bis 4,0 m, bevorzugt 0,2 m bis 2,75 m, und/oder eine Breite von 0,2 m bis 4,0 m, bevorzugt 1,0 m bis 2,75 m, und/oder eine Höhe von 8 cm bis 3,0 m, bevorzugt 0,14 m bis 2,75 m, auf.

In bestimmten Ausführungsformen weist der Kulturtopf eine zylindrische Form mit einem Durchmesser von 0,05 m bis 4 m, bevorzugt 0,5 m bis 1,0 m, und/oder einer Höhe von 0,07 m bis 3 m, bevorzugt 0,5 m bis 1,0 m, auf

Der Kulturtopf kann in jeder beliebigen Form und Größe passend zur Größe des Wasserbeckens und den zu verwendeten Pflanzen gefertigt werden.

Mit diesen Dimensionen ist es möglich, innerhalb kürzester Zeit (z.B. innerhalb eines Tages) Flächen zu begrünen. Es kann einerseits erreicht werden, dass die Begrünung sofort natürlich, d.h. eingewachsen, aussieht, da die Pflanzen in ihren großen Kulturtöpfen über einen längeren Zeitraum in einer Gärtnerei einwachsen konnten. Andererseits können auch sehr große Pflanzen, die lange herangezogen wurden und in ihrem Kulturtopf eingewachsen sind, eingepflanzt werden. Und es können alle Pflanzen aus Baumschulen, Gärtnereien, Anzuchtbetrieben in jeder Größe direkt aus dem Boden in die Kulturtöpfe eingepflanzt und anschließen sofort im Pflanzsystem verwendet werden.

Die Abdeckung besteht in bestimmten Ausführungsformen aus Metall oder Kunststoff. Die Abdeckung bildet bevorzugt eine luft- und wasserdampfdichte Fläche, bevorzugt mit mindestens einer Öffnung, insbesondere zur Durchführung eines Teils der Pflanze. In bestimmten Ausbildungsformen ist die Abdeckung rund oder rechteckig. In bestimmten Ausbildungsformen ist die Abdeckung nicht symmetrisch. In bestimmten bevorzugten Ausführungsformen befindet sich die Öffnung nicht mittig in der Abdeckung. In bestimmten Ausführungsformen besteht die Abdeckung aus einem Teil. In anderen Ausführungsformen besteht die Abdeckung aus mehreren Teilen, insbesondere aus zwei Halbkreisen oder aus mehreren Lamellen, die radial um eine Öffnung angeordnet sind. In der Ausführungsform mit mehreren Lamellen, die radial um eine Öffnung angeordnet sind, liegen die Lamellen in manchen Ausführungsformen horizontal in einer Ebene. In anderen Ausführungsformen mit mehreren Lamellen, die radial um eine Öffnung angeordnet sind, sind die Lamellen derart angeordnet, dass Wasser von den Lamellen durch die Öffnung in der Abdeckung in das Wasserbecken läuft. Somit kann Regenwasser gesammelt bzw. von einer versiegelten Oberfläche abgeleitet werden. Auch in anderen Ausführungsformen kann die Abdeckung derart gestaltet sein, dass Wasser auf der Abdeckung durch die Öffnung in das Wasserbecken fließt. In bestimmten Ausführungsformen weist die Abdeckung des Wasserbeckens eine kreisrunde Öffnung, und/oder einen Spalt auf. Durch die Öffnung kann die Pflanze mit ihrem Stamm aus der Pflanzvorrichtung wachsen. In bestimmten Ausführungsformen weist die Öffnung in der Abdeckung eine Fläche von 0,35 m² bis 1,5 m² auf. Die Abdeckung kann beispielsweise ein Blech sein. Durch eine kreisrunde Ausbildung der Öffnung in der Abdeckung auf dem Wasserbecken wird die Öffnung der Form des Stammes angepasst, was das Symmetrieempfinden des Menschen anspricht. Eine freigelassene Fläche von 0,35 m² bis 1,5 m² ermöglicht es, dass große Pflanzen mit dickem Stamm aus der Vorrichtung wachsen können und gleichzeitig nur eine möglichst geringe Oberfläche zum Verdampfen von Wasser aus dem Wasserbecken bzw. dem atmosphärischen Bereich bereitgestellt wird.

In bestimmten Ausführungsformen befindet sich die Abdeckung in einer Ebene mit dem oberen Rand des Kulturtopfes oder in einer Ebene oberhalb des oberen Randes des Kulturtopfes. Bevorzugt ist in diesen Ausführungsformen, dass sich die Abdeckung in einer Ebene oberhalb des oberen Randes des Kulturtopfes befindet und, mit Ausnahme einer Öffnung für die Pflanze, eine möglichst große Fläche des Inhaltes des Kulturtopfes verdeckt bzw. bedeckt. Somit wird ein Verdunsten aus dem atmosphärischen Bereich verhindert durch das Substrat in dem Kulturtopf verringert und andererseits bietet die Abdeckung die Möglichkeit, die Fläche für Fahrzeuge, Fußgänger etc. nutzbar zu machen. Ferner wird das Substrat größtenteils verdeckt, wodurch ein Anwachsen von Unkräutern oder Flugsamen stark reduziert wird. Bevorzugt ist in diesen Ausführungsformen, dass die Abdeckung auf dem oberen Rand des Kulturtopfes aufliegt. Dies bietet eine höhere Stabilität und eine bessere Abdichtung des atmosphärischen Bereiches. Eine bessere Abdichtung des atmosphärischen Bereiches kann auch durch Dichtelemente zwischen dem Kulturtopf bzw. dessen oberen Rand und der Abdeckung erfolgen.

In anderen Ausführungsformen befindet sich die Abdeckung in einer Ebene unterhalb des oberen Randes des Kulturtopfes.

In bestimmten Ausführungsformen werden alle Oberflächen der Abdeckungen inklusive dem freien Ausschnitt des Kulturtopfes mit beliebigem Material, bevorzugt Zierkiesen, abgedeckt. Die Technik des Systems verschwindet hierdurch optisch gesehen komplett.

In bestimmten Ausführungsformen weist das Wasserbecken eine Wartungstreppe auf. Dadurch kann die Pflanzvorrichtung besser gewartet werden. Filter und Leitungen können beispielsweise gereinigt werden. Außerdem kann ein Wurzelverjüngungsschnitt der Nährstoffwurzeln durchgeführt werden und die abgeschnittenen Wurzeln entsorgt werden.

In bestimmten Ausführungsformen weist die Abdeckung eine Öffnung zum Betreten bzw. Besteigen des Wasserbeckens auf. Filter und Leitungen können beispielsweise gereinigt werden. Außerdem kann ein Wurzelverjüngungsschnitt der Nährstoffwurzeln durchgeführt werden und die abgeschnittenen Wurzeln entsorgt werden.

In bestimmten Ausführungsformen weist das Wasserbecken eine Öffnung am Boden des Wasserbeckens auf. Diese Öffnung ist normalerweise verschlossen. Um für eine Demontage oder Wartung der Pflanzvorrichtung Wasser aus dem Wasserbecken zu entfernen, kann sie geöffnet werden.

In bestimmten Ausführungsformen weist der Kulturtopf zum Einsetzen des Kulturtopfes in das Wasserbecken und/oder zum Entnehmen des Kulturtopfes aus dem Wasserbecken, insbesondere mittels Kran, Fixierungsmittel, insbesondere Ösen, auf. Dies ermöglicht einen schnellen Aufbau der Pflanzvorrichtung. Dadurch können auch schwere Pflanzen im Kulturtopf bzw. in Kulturtöpfen eingesetzt werden. Bei Bedarf kann der Kulturtopf mit Bepflanzung relative mühelos und kostengünstig ausgetauscht werden.

In bevorzugten Ausführungsformen befindet sich das Wasserbecken in einer Grube im Erdreich. Hierdurch entspricht die Temperatur der Wurzeln im Kulturtopf in etwa der Temperatur wie sie Pflanzenwurzeln in ihrer natürlichen Umgebung erfahren. Darüber hinaus kühlt das Erdreich das Wasser und den Kulturtopf, so dass weniger Wasser verdunstet. Darüber hinaus stabilisiert das Erdreich die Pflanzvorrichtung mechanisch. Die Unterbringung im Erdreich stellt ferner einen Diebstahlschutz dar und verhindert, dass sich Leute an der Optik des Kulturtopfes stören. In manchen dieser Ausführungsformen weist das Wasserbecken zum Einsetzen des Wasserbeckens in eine Grube im Erdreich und/oder zum Entnehmen des Wasserbeckens aus einer Grube im Erdreich, insbesondere mittels Kran, Fixierungsmittel, insbesondere Ösen, auf. Dadurch wird ein schneller Aufbau der Pflanzvorrichtung möglich.

In bestimmten Ausführungsformen weist der Kulturtopf als Halteeinrichtung Füße, optional höhenverstellbare Füße, auf und bevorzugt ist der Kulturtopf durch die Füße derart in dem Wasserbecken positioniert, dass der Abstand zwischen dem Boden des Kulturtopfes und dem Boden des Wasserbeckens, bezogen auf die Höhe des Wasserbeckens, 5 % bis 30 % beträgt. Füße als Halteeinrichtung bieten eine große mechanische Stabilität, insbesondere für schwere Kulturtöpfe. Durch die höhenverstellbaren Füße kann der Kulturtopf dem aktuellen Wasserstand angepasst werden.

In bestimmten Ausführungsformen weist der Kulturtopf als Halteeinrichtung zur Befestigung an dem Mantel des Wasserbeckens mindestens eine Halterung, insbesondere einen Haken oder eine Kralle, auf und bevorzugt ist der Kulturtopf durch Halterungen derart in dem Wasserbecken positioniert, dass der Abstand zwischen dem Boden des Kulturtopfes und dem Boden des Wasserbeckens, bezogen auf die Höhe des Wasserbeckens, 5 % bis 30 % beträgt.

In bestimmten Ausführungsformen ist der Wasserstand derart eingestellt, dass sich zumindest der Boden und ein Teil des Mantels des Kulturtopfes im Wasser des Wasserbeckens befindet.

In bestimmten Ausführungsformen ist mindestens eine Bewässerungsschnur am Boden und/oder am Mantel des Kulturtopfes angebracht. Die mindestens eine Bewässerungsschnur befindet sich zumindest abschnittsweise im Wasser des Wasserbeckens. Die Bewässerungsschnur saugt Wasser auf und transportiert dieses Wasser in den Kulturtopf. In bestimmten Ausführungsformen ist ein Befestigungsabschnitt, an dem die mindestens eine Bewässerungsschnur am Kulturtopf befestigt ist, wasserdurchlässig ausgebildet, so dass das von der Bewässerungsschnur aufgesaugte Wasser in den Kulturtopf transportiert werden kann. In bestimmten Ausführungsformen befindet sich die mindestens eine Bewässerungsschnur durch Perforationen in Mantel und/oder Boden des Kulturtopfes in Berührung mit Substrat und/oder Wurzeln in dem Kulturtopf. Die Bewässerungsschnur kann Glasfasern umfassen. Vorzugsweise besteht die Bewässerungsschnur aus Glasfasern, insbesondere aus einem Glasfaserbündel. Des Weiteren ist es möglich, dass die Bewässerungsschnur aus einem Textilmaterial besteht oder Textilmaterial umfasst. Mit Hilfe einer derartigen Bewässerungsschnur ist es möglich, dass in den Kulturtopf auch bei einem sinkenden Wasserstand in dem Wasserbecken Wasser transportiert werden kann. Eine Bewässerungsschnur kann demnach den Abstand zwischen dem Kulturtopfboden und der Wasseroberfläche überwinden und das Wasser aufsaugen und in den Kulturtopf transportieren. Die Bewässerungsschnur kann auch als Bewässerungsdocht bezeichnet werden. Der Bewässerungsdocht kann in den Kulturtopf eingelegt sein. Die Bewässerungsschnur bzw. der Bewässerungsdocht hat mit seinen kapillaren Eigenschaften die Funktion, bei jungen Pflanzen mit wenig vorhandenen Wurzeln im Kulturtopf die Neubildung und Versorgung von Wurzeln zu unterstützen.

In bevorzugten Ausführungsformen besteht der Kulturtopf aus Kunststoff oder Metall, bevorzugt aus Edelstahl.

In bestimmten Ausführungsformen besteht der Kulturtopf aus Fischernetzen, insbesondere alten, gebrauchsunfähigen Fischernetzen, oder enthält diese. Der Vorteil Kulturtöpfe aus Fischernetzen zu produzieren liegt darin, dass das Ausgangsmaterial an sich über eine hochkapillare Wirkung verfügt und zudem das Cradle to Cradle Prinzip zur Wirkung kommt.

In bestimmten Ausführungsformen umfasst der Kulturtopf einen inneren Topf aus Kunststoff und einen äußeren Topf aus Metall, bevorzugt aus Edelstahl, wobei der innere und der äußere Topf jeweils einen Boden und einen Mantel umfassen, wobei jeweils der Mantel und/oder der Boden zumindest teilweise perforiert ist.

In bevorzugten Ausführungsformen besteht das Wasserbecken aus Metall oder Kunststoff.

In bevorzugten Ausführungsformen ist das Wasserbecken über eine Verankerung, insbesondere über eine Platte oder mehrere Metallschienen, im Erdreich verankert.

In bestimmten Ausführungsformen ist zwischen der Verankerung im Erdreich und dem Stamm der Pflanze mindestens ein Befestigungsmittel, insbesondere ein Seil oder Drahtseil, gespannt. Hierdurch wird die Stabilität der Pflanzvorrichtung erhöht. Insbesondere kann der Wuchs der Pflanze gesteuert werden und die Pflanze vor Sturm geschützt werden.

In bestimmten Ausführungsformen weist das Wasser-Überlaufsystem eine Filtervorrichtung auf.

Der Erfindung liegt auch die Aufgabe zu Grunde, ein Pflanzsystem anzugeben, das zumindest einige der eingangs genannten Aufgaben bewältigen kann. Das erfindungsgemäße Pflanzsystem nach Anspruch 1 umfasst mindestens eine erfindungsgemäße erste Pflanzvorrichtung und mindestens eine zweite Pflanzvorrichtung, und ein Wasserführungssystem zum Transport von Wasser zwischen den Pflanzvorrichtungen.

Ein Wasserführungssystem zum Transport von Wasser zwischen den Pflanzvorrichtungen führt zu einer besseren Wasserqualität und ein Wasserverlust durch Versickerungen im Erdreich wird unterbunden. Außerdem werden Ungleichheiten im Wasserstand zwischen den Wasserbecken der Pflanzvorrichtungen ausgeglichen. Darüber hinaus kann in bestimmten Ausführungsformen in einer Pflanzvorrichtung Wasser aufgefangen werden, das dann einer anderen Pflanzvorrichtung zur Verfügung gestellt wird.

Die Vorteile, die sich aus der erfindungsgemäßem Pflanzvorrichtung ergeben, wirken auch in dem erfindungsgemäßen Pflanzsystem nach Anspruch 1. Ebenso gelten Beschreibungen und Ausführungsformen zur Pflanzvorrichtung auch für das erfindungsgemäße Pflanzsystem.

Bevorzugt weisen die erste und die zweite Pflanzvorrichtung, und optional die weiteren Pflanzvorrichtungen, jeweils ein Wasser-Überlaufsystem auf, das Wasser aus einem Wasserbecken der jeweiligen Pflanzvorrichtung abführt, sobald das Wasser in dem Wasserbecken auf eine bestimmte Höhe angestiegen ist. Das Wasser wird bevorzugt in eine andere Pflanzvorrichtung und/oder einen Wasservorratsbehälter geführt.

In bevorzugten Ausführungsformen umfasst das Wasserführungssystem, insbesondere zwischen den Pflanzvorrichtungen, Wasserleitungen.

Das Pflanzsystem und/oder das Wasserführungssystem können an eine Wasserversorgung, insbesondere eine städtische Wasserversorgung, angeschlossen sein. Hierfür können Ventile, Einlaufstutzen etc. in einer Art und Weise angebracht werden, wie sie dem Fachmann geläufig ist.

Das Wasserführungssystem und insbesondere dessen Wasserleitungen ist bzw. sind bevorzugt wasserdicht. Dadurch wird der Wasserverlust aus dem Pflanzsystem minimiert.

Bevorzugt führt das Wasserführungssystem Wasser unterhalb einer Abdeckung in die jeweilige Pflanzvorrichtung. Dadurch wird ein Verdunsten von Wasser aus dem Pflanzsystem minimiert.

In bestimmten Ausführungsformen umfasst das Wasserführungssystem ferner einen Wasservorratsbehälter, der vorzugsweise in einer Ebene unterhalb einer Bodenoberfläche, insbesondere zumindest teilweise unterhalb eines/des Wasserbeckens, bevorzugt unterhalb des Wasserbeckens der ersten Pflanzvorrichtung, angeordnet ist. Durch die tiefere Position im Erdreich fließt Wasser von selbst aus Wasser-Überlaufsystemen von Pflanzvorrichtungen in den Wasservorratsbehälter. In dem Wasservorratsbehälter kann Wasser gesammelt werden.

In bestimmten Ausführungsformen umfasst der Wasservorratsbehälter eine Wasseraufbereitungsvorrichtung. Somit kann eine gleichbleibende Wasserqualität sichergestellt werden.

In bestimmten Ausführungsformen umfasst der Wasservorratsbehälter eine Nährstoffzugabevorrichtung. Somit kann eine gleichbleibende Nährstoffversorgung der Pflanzen sichergestellt werden. Außerdem wird verhindert, dass formstabiler Langzeitdünger verwendet werden muss, der im Kulturtopf wie oben beschrieben zu Wurzelfäule führen kann.

In bestimmten Ausführungsformen stellt das im Wasservorratsbehälter befindliche Wasser ein Trägermedium einer Kälte- und/oder Wärmevorrichtung, insbesondere einer Sorptionskältemaschine und/oder einer Sorptionswärmemaschine, dar.

Des Weiteren ist es in bestimmten Ausführungsformen möglich, aus dem im Wasservorratsbehälter befindlichen Wasser im Sinne eines Wärmetauschers Energie zu gewinnen. Mit Hilfe des erfindungsgemäßen Pflanzsystems kann somit nicht nur ein Bewässerungssystem, sondern auch ein Energiegewinnungssystem zur Verfügung gestellt werden. Das erfindungsgemäße Pflanzsystem zeichnet sich durch einen äußerst geringen Wasserverbrauch aus, wobei überschüssiges Wasser recycelt und wiederverwendet werden kann.

In bestimmten Ausführungsformen weist das Wasserführungssystem Mittel auf, um aus einem Wasser-Überlaufsystem der zweiten Pflanzvorrichtung Wasser in das Wasserbecken der ersten Pflanzvorrichtung zu führen. Dabei folgt das Wasser bevorzugt der Schwerkraft. Ferner weist das Wasserführungssystem in diesen Ausführungsformen Mittel auf, um aus dem Wasser-Überlaufsystem der ersten Pflanzvorrichtung Wasser, optional über eine Sprinkleranlage, in die zweite Pflanzvorrichtung zu führen. Hierfür umfasst das Wasserführungssystem bevorzugt eine Pumpe. Auf diese Art und Weise kommt es zu einer Art Wasserkreislauf zwischen erster und zweiter Pflanzvorrichtung.

Ferner ist in bestimmten Ausführungsformen zwischen dem Wasser-Überlaufsystem der ersten Pflanzvorrichtung und der zweiten Pflanzvorrichtung ein Wasservorratsbehälter geschaltet.

In bestimmten Ausführungsformen handelt es sich bei der zweiten Pflanzvorrichtung um eine Pflanzvorrichtung, die dazu ausgelegt ist, Regenwasser oder Wasser aus einer Sprinkleranlage, aufzunehmen. In bestimmten Ausführungsformen kann genug Regenwasser oder Wasser aus einer Sprinkleranlage aufgenommen werden, um den Wasservorratsbehälter zumindest teilweise zu befüllen.

In bestimmten Ausführungsformen umfasst die zweite Pflanzvorrichtung ein Wasserbecken mit einem Wasser-Überlaufsystem, wobei das Wasser-Überlaufsystem in dem Wasserbecken einen Wasserpegel zwischen 5 cm - 25 cm, insbesondere von ca. 13 cm, einstellt, wobei in dem Wasserbecken mindestens ein Moduleinsatz ausgebildet ist, in dem eine Pflanze, insbesondere ein Kulturtopf, einsetzbar bzw. eingesetzt oder auf dem eine Vegetationsdecke einsetzbar bzw. eingesetzt ist, wobei der Moduleinsatz derart ausgebildet ist, dass zwischen einem Boden des Wasserbeckens und dem Moduleinsatz ein Vegetationsraum gebildet ist, der vom Wasserpegel und einem zwischen dem Wasserpegel und dem Moduleinsatz ausgebildeten Atmosphären-Bereich gebildet ist. Aus einer solchen Pflanzvorrichtung verdampft sehr wenig Wasser. In bestimmten Ausführungsformen ist der Moduleinsatz als Topfeinsatz ausgebildet, in dem ein Kulturtopf einsetzbar ist, wobei der Kulturtopf vorzugsweise einen Kulturtopfmantel und einen Kulturtopfboden aufweist und der Kulturtopfboden in einem Höhenabstand zu einem Boden des Wasserbeckens positioniert ist. In bestimmten Ausführungsformen umfasst der Moduleinsatz einen Rahmen, an dem ein lochsiebartiges Element ausgebildet ist, das vorzugsweise als Auflagefläche für eine Vegetationsdecke ausgebildet ist.

Das Pflanzsystem ist geeignet für alle Bodenbereiche, insbesondere auch Bodenbereiche, in denen eigentlich kein Erdreich für Pflanzenwachstum vorhanden ist, das heißt, Bodenbereiche aus Stein, Bodenbereiche in der Wüste oder versiegelte Bodenbereiche.

Im Folgenden werden anhand schematischer Zeichnungen Ausführungsbeispiele der Erfindung näher erläutert.

Dabei zeigt
- Fig. 1: ein Pflanzsystem gemäß einer Ausführungsform der vorliegenden Erfindung mit einer Pflanzvorrichtung gemäß einer Ausführungsform der vorliegenden Erfindung; und
- Fig. 2: eine Detailansicht der zweiten Pflanzvorrichtung in dem Pflanzsystem von Fig. 1.

In der nachfolgenden Beschreibung werden für gleiche und gleich wirkende Teile dieselben Bezugsziffern verwendet.

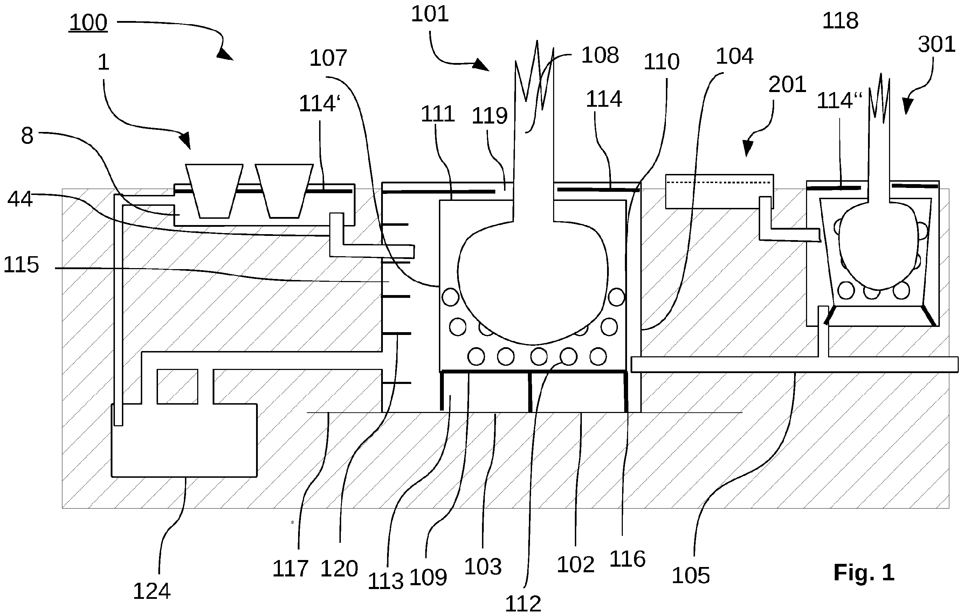

Fig. 1 zeigt ein Pflanzsystem 100 gemäß einer Ausführungsform der vorliegenden Erfindung. Das Pflanzsystem 100 umfasst eine erste Pflanzvorrichtung 101 gemäß einer Ausführungsform der vorliegenden Erfindung. Die Pflanzvorrichtung 101 umfasst ein Wasserbecken 102 mit einem Boden 103 und einem Mantel 104 zum Aufnehmen und Bereitstellen von Wasser. Die Pflanzvorrichtung 101 umfasst ferner ein Wasser-Überlaufsystem 105 zum Einstellen eines Wasserstandes in dem Wasserbecken 102 derart, dass höchstens 1/3 des Wasserbeckens 102 mit Wasser befüllt ist. Die Pflanzvorrichtung 101 umfasst ferner einen Kulturtopf 107 zur Aufnahme von organischem und/oder anorganischem Substrat und einer Pflanze 108, wobei der Kulturtopf 107 mindestens einen Boden 109, einen Mantel 110 und einen oberen Rand 111 umfasst, wobei der Mantel 110 und der Boden 109 perforiert sind. In dieser Ausführungsform bedeutet dies, dass Mantel 110 und Boden 109 mit Durchgängen 112 versehen sind, die in diesem Beispiel einen Durchmesser von 5 cm aufweisen. Diese Durchgänge 112 sind mit Sieben versehen, um zu verhindern, dass Substrat in das Wasserbecken 102 fällt. Durch die Durchgänge 112 können Wurzeln wachsen und es findet ein Luft-, Wasser-, und Nährstoffaustausch zwischen Kulturtopfinnerem und Vegetationsraum 113 statt. Ferner wird durch die Durchgänge Gewicht und Material eingespart. Die Pflanzvorrichtung 101 umfasst ferner eine Abdeckung 114, die an oder im Wasserbecken 102 derart gehaltert ist, dass sich im Inneren des Wasserbeckens 102 ein atmosphärischer Bereich 115 ausbildet. Gekennzeichnet ist die Pflanzvorrichtung 101 ferner durch eine Halteeinrichtung 116, die den Kulturtopf 107 gegenüber dem Boden 103 des Wasserbeckens 102 derart abstützt, dass der Boden 109 des Kulturtopfes 107 in diesem Beispiel 25 cm vom Boden 103 des Wasserbeckens 102 beabstandet ist.

Das Wasserbecken 102 wird nach unten durch den Boden 103 und zu den Seiten durch den Mantel 104 begrenzt. Nach oben wird das Wasserbecken 102 zumindest teilweise durch die Abdeckung 114 begrenzt bzw. abgeschlossen. Das Wasserbecken 102 weist eine quaderförmige Form auf. Dabei beträgt die Länge des Quaders 2,5 m, die Breite 2,5 m, und die Höhe 2,0 m. Das Wasserbecken 102 besteht in diesem Beispiel aus Edelstahl, wodurch es lange bestehen kann. Das Wasserbecken 102 ist über eine Platte 117 im Erdreich verankert.

Der Kulturtopf 107 befindet sich innerhalb des Wasserbeckens 102, d.h. zwischen Boden 103, Mantel 104 und Abdichtung 114 des Wasserbeckens 102. Der Kulturtopf 107 wird nach unten durch den Boden 109 und zu den Seiten durch den Mantel 110 begrenzt. Der Mantel 110 selber wird nach unten durch den Boden 109 und nach oben durch einen oberen Rand 111 begrenzt. Der Kulturtopf 107 besteht in diesem Beispiel aus Edelstahl, wodurch er lange bestehen kann. Der Kulturtopf 107 weist eine quaderförmige Form auf. Dabei beträgt die Länge des Quaders 1,75 m, die Breite 2,0 m, und die Höhe 1,9 m. Aus dem Kulturtopf wächst eine sehr große Palme, die in den Kulturtopf gepflanzt wurde und das Klima in ihrer Umgebung wesentlich verbessert und zugleich neuen Lebensraum für Insekten, Vögel und Tiere bietet.

Es wird in diesem Beispiel ein großes Volumen des Wasserbeckens 102 mit dem Kulturtopf 107 ausgefüllt. Daneben wird in dem Wasserbecken 102 ein Volumen freigelassen, damit das Wasserbecken 102 zur Wartung betreten werden kann, ohne den Kulturtopf 107 herausnehmen zu müssen. Außerdem verbleibt ein Volumen am Boden 103 des Wasserbeckens 102, in dem sich Wasser befindet und in das Wurzeln hineinwachsen können.

In dem Wasserbecken 102 befindet sich Wasser, das in regelmäßigen Abständen mit einer wässrigen Nährstofflösung versetzt wird. In dem Kulturtopf 107 befindet sich in diesem Beispiel neben Pflanzenteilen der Pflanze, einer Palme, 108 als anorganisches Substrat Tongranulat zum Halt, zur Wurzelbildung, zur Wurzelbelüftung, zur Bewässerung und Nährstoffversorgung.

Der atmosphärische Bereich 115 ist ein Raum mit einer herabgesetzten Luftwechselrate mit der Umwelt 118, in dem ein für das Pflanzenwachstum ideales Wachstumsklima mit hoher Luftfeuchtigkeit herrscht und bei dem eine ungehinderte Verdunstung von Wasser nach Außen stark reduziert bis ausgeschlossen wird. Der atmosphärische Bereich 115 wird von der Umwelt 118 entkoppelt, wodurch die Luftwechselrate zwischen atmosphärischem Bereich 115 und Umwelt 118 herabgesetzt wird. Ein Luftaustausch mit der Umwelt 118 ist in dieser Ausführungsform nur noch über den Kulturtopf durch das Substrat und die Öffnung 119 in der Abdeckung 114 hindurch möglich. Der abgeschlossene atmosphärische Bereich 115 zwischen Wasserstand und Abdeckung 114 bildet gemeinsam mit dem Wasser zwischen dem Boden 103 des Wasserbeckens und dem Wasserstand einen Vegetationsraum 113. Die Konstruktionsweise der Pflanzvorrichtung 101 sorgt zum einen für ein gutes Wachstumsklima im Wurzelvegetationsbereich bzw. Vegetationsraum und im atmosphärischen Bereich 115 mit einer hohen Luftfeuchtigkeit, und zum anderen verhindert die Konstruktionsweise ungehindertes Verdunsten von Wasser oder wässriger Nährlösung aus dem atmosphärischen Bereich 115 nach außen.

Die Pflanzvorrichtung 101 umfasst eine Halteeinrichtung 116, die den Kulturtopf 107 gegenüber dem Boden 103 des Wasserbeckens 102 derart abstützt, dass der Boden 109 des Kulturtopfes 107 deutlich vom Boden 103 des Wasserbeckens 102 beabstandet ist. Dabei handelt es sich bei der Abdeckung 114 und der Halteeinrichtung 116 um zwei unterschiedliche Elemente. In diesem Beispiel handelt es sich bei der Halteeinrichtung 116 um Füße. In dieser Ausführungsform ist der Boden 109 des Kulturtopfes 107 20 cm vom Boden 103 des Wasserbeckens 102 beabstandet. Mit anderen Worten beträgt der Abstand zwischen dem Boden 109 des Kulturtopfes 107 und dem Boden 103 des Wasserbeckens 102, bezogen auf die Höhe des Wasserbeckens, 10 %.

Die Pflanzenwurzeln wachsen durch den perforierten Mantel 104 und Boden 103 in das Wasser. Zwischen dem Boden 103 des Wasserbeckens 102 und dem Boden 109 des Kulturtopfes 107 können sich somit Wurzeln ausbreiten. Da hier weder Substrat noch Kulturtopfmaterial vorliegt, kann es zu keiner Wurzelverdichtung oder Substratverdichtung kommen. Der Abstand zwischen dem Boden 109 des Kulturtopfes 107 und dem Boden 103 des Wasserbeckens 102 sowie der maximale Wasserstand sind optimal an die Bedingungen der Palme 108 angepasst. Neue Wurzeln, so genannte Nährstoffwurzeln, bilden sich hauptsächlich außerhalb des Bodenbereiches des Kulturtopfes im Wasserreservoire des Pflanzbeckens. Sonst übliche Trieb- und Haltwurzeln bilden sich stark reduziert, da die Pflanze bereits über einem Nährstoffbereich (Wasser) schwebt. Da sich in dem Wasserbereich und im Wurzelvegetationsbereich außerhalb des Kulturtopfes kein Pflanzsubstrat befindet ist eine Wurzelverdichtung mit daraus resultierender Wurzelfäulnis ausgeschlossen.Die Vitalität der Pflanze 108 wird dadurch nachhaltig verbessert, und die Haltbarkeit maßgeblich erhöht. Durch die Vermeidung der Wurzelverdichtung in Substraten sind Verformungen bzw. Rissbildungen in dem Wasserbecken bzw. Kulturtopf nicht mehr möglich.

Das Wasser verbleibt nach dem Verdampfen größtenteils unter der Abdeckung 114 und lagert sich beim Verdunsten an der Unterfläche der Abdeckung 114 sowie an dem Mantel 110 bzw. 104 des Kulturtopfes 107 und des Wasserbeckens 102 ab und tropft bzw. läuft wieder in das Wasserbecken 102. Der Wasserverbrauch wird gegenüber herkömmlichen Pflanzsystemen nachhaltig um bis zu 80 % reduziert und notwendige Gießintervalle wesentlich verlängert. Dies spart Personal und/oder Verwaltungskosten. Dies ermöglicht jetzt auch Begrünungsvorhaben in wasserarmen Regionen und spart zusätzlich Personal und/oder Verwaltungskosten für Gieß- und Pflegearbeiten.

Das Wasser-Überlaufsystem 105 besteht aus einem einfachen Rohr, das Wasser aus dem Wasserbecken 102 abführt, sobald das Wasser in dem Wasserbecken 102 auf eine bestimmte Höhe, gemessen vom Boden 103 des Wasserbeckens 102, den maximalen Wasserstand, angestiegen ist. Das Rohr ist horizontaler Ausrichtung in dem Wasserbecken 102 angebracht. Das Wasser-Überlaufsystem 105 führt das Wasser in einen Wasservorratsbehälter 124. In dieser Ausführungsformen ist das Wasser-Überlaufsystem 105 zum Einstellen eines Wasserstandes in dem Wasserbecken 102 derart ausgelegt, dass, bezogen auf die Höhe des Wasserbeckens 102, höchstens 1/10 des Wasserbeckens 102 mit Wasser befüllt ist. Dies bedeutet, dass der Wasserstand in dem Wasserbecken 102 maximal 20 cm beträgt. Somit berühren sich der Boden des Kulturtopfes und das Wasser in dem Wasserbecken gerade so, was wie oben beschrieben, zu Nährstoffwurzelbildungen führt und Wurzelverdichtungen mit folgender Wurzelfäulnis im System verhindert.

Der unterhalb der Abdeckung 114 liegende Teil des Vegetationsraums 113 enthält im Wesentlichen nur Luft und Wasser und Wurzeln. Im Falle eines notwendig werdenden Ersetzens einer Pflanze 108 kann der Kulturtopf 107 mit Pflanze 108 sehr einfach ausgetauscht werden. Ein wesentlicher Vorteil besteht darin, dass nicht die komplette Pflanzvorrichtung 101 entleert oder ausgetauscht werden muss. Das Wasser bleibt klar, sauber und geruchsneutral, ohne biologisch umzukippen. Ein ganz wesentlicher Vorteil ist die optimale, feuchte Luftzufuhr über die Durchgänge des Kulturtopfes im Wurzelbereich des Kulturtopfes. Zusammenfassend können so übliche und nötige Umpflanzungen auf Dauer entfallen. Mit Hilfe der erfindungsgemäßen Pflanzvorrichtung 101 kann einfach und leicht ein Wurzelverjüngungsschnitt der Nährstoffwurzeln durchgeführt werden, da sich im Bereich der Nährstoffwurzeln keinerlei Füllmaterial befindet. Ein Wurzelverjüngungsschnitt stärkt die Vitalität der Pflanze 108. Ein Wurzelverjüngungsschnitt kann leicht durchgeführt werden, da in dem Wasserbecken 102 Platz für eine Person ist.

Die Abdeckung 114 des Wasserbeckens 102 ist ein Blech, das eine kreisrunde Öffnung 119 aufweist. Durch die Öffnung 119 wächst die Pflanze 108 mit ihrem Stamm aus der Pflanzvorrichtung 101. Die Öffnung 119 in der Abdeckung 114 weist eine Fläche von 0,5 m² auf. Die Fläche von 0,5 m² bildet die einzige Fläche, über welche Wasserverdunstung aus dem Wasserbecken 102 bzw. Kulturtopf 107 erfolgen kann. Die Abdeckung 114 befindet sich in einer Ebene oberhalb des oberen Randes 111 des Kulturtopfes 107 und verdeckt bzw. bedeckt eine möglichst große Fläche des Kulturtopfes 107. Somit wird ein Verdunsten aus dem atmosphärischen Bereich 115 durch das Substrat in dem Kulturtopf 107 verringert und andererseits bietet die Abdeckung 114 die Möglichkeit, die Fläche für Fahrzeuge, Fußgänger etc. nutzbar zu machen. Ferner wird das Substrat größtenteils verdeckt, welches gewisse Personen als störend betrachten. In diesem Beispiel liegt die Abdeckung 114 auf dem oberen Rand 111 des Kulturtopfes 107 auf. Dies bietet eine höhere Stabilität und eine bessere Abdichtung des atmosphärischen Bereiches 115.

Das Wasserbecken 102 weist eine Wartungstreppe 120 auf. Dadurch kann die Pflanzvorrichtung 101 besser gewartet werden. Filter und Leitungen können beispielsweise gereinigt werden. Außerdem kann ein Wurzelverjüngungsschnitt der Nährstoffwurzeln durchgeführt werden.

Die Abdeckung 114 weist eine Öffnung 119 zum Betreten bzw. Besteigen des Wasserbeckens 102 auf. Filter und Leitungen können beispielsweise gereinigt werden. Außerdem kann ein Wurzelverjüngungsschnitt der Nährstoffwurzeln durchgeführt werden.

Der Kulturtopf 107 weist zum Einsetzen des Kulturtopfes 107 in das Wasserbecken 102 und zum Entnehmen des Kulturtopfes aus dem Wasserbecken 102, mittels Kran, Ösen, auf. Dies ermöglicht einen schnellen Aufbau der Pflanzvorrichtung 101. Dadurch kann der schwere Kulturtopf 107 mit Großpflanzen, wie der großen Palme 108, eingesetzt werden. Bei Bedarf kann der bepflanzte Kulturtopf 107 relative mühelos und kostengünstig ausgetauscht werden.

Das Wasserbecken 102 befindet sich in einer Grube im Erdreich. Hierdurch entspricht die Temperatur im Kulturtopf in etwa der Temperatur wie sie Pflanzenwurzeln in ihrer natürlichen Umgebung erfahren. Darüber hinaus kühlt das Erdreich das Wasser und den Kulturtopf 107, so dass weniger Wasser verdunstet. Darüber hinaus stabilisiert das Erdreich die Pflanzvorrichtung 101 mechanisch. Die Unterbringung im Erdreich stellt ferner einen Diebstahlschutz dar und verhindert, dass sich Leute an der Optik des Kulturtopfes 107 stören. Das Wasserbecken 102 umfasst zum Einsetzen des Wasserbeckens 102 in eine Grube im Erdreich und zum Entnehmen des Wasserbeckens 102 aus der Grube im Erdreich, mittels Kran, Ösen. Dadurch wird ein schneller Aufbau der Pflanzvorrichtung 101 möglich.

Durch diese Merkmale ist es möglich, innerhalb kürzester Zeit, z.B. innerhalb eines Tages, Flächen großzügig zu begrünen.

Das Pflanzsystem 100 nach Anspruch 1 umfasst neben der ersten Pflanzvorrichtung 101 eine zweite Pflanzvorrichtung 1. Ferner umfasst das Pflanzsystem 100 ein Wasserführungssystem zum Transport von Wasser in beiden Richtungen zwischen erster und zweiter Pflanzvorrichtung 101 bzw. 1. Das Wasserführungssystem umfasst Leitungen und einen Wasservorratsbehälter 124, der in einer Ebene unterhalb des Wasserbeckens 102 der ersten Pflanzvorrichtung 101 angeordnet ist. Die zweite Pflanzvorrichtung 1 weist ebenfalls ein Wasser-Überlaufsystem 44 auf, das Wasser aus einem Wasserbecken 8 der zweiten Pflanzvorrichtung 1 abführt, sobald das Wasser in dem Wasserbecken 8 auf eine bestimmte Höhe angestiegen ist. Wasser fließt der Schwerkraft folgend aus dem Wasser-Überlaufsystem 44 der zweiten Pflanzvorrichtung 1 in das Wasserbecken 102 der ersten Pflanzvorrichtung 101. Wasser fließt der Schwerkraft folgend aus dem Wasser-Überlaufsystem 105 der ersten Pflanzvorrichtung 101 in den Wasservorratsbehälter 124 (nicht gezeigt). Aus dem Wasservorratsbehälter 124 wird das Wasser mittels einer Pumpe in die zweite Pflanzvorrichtung 1 geführt. Die zweite Pflanzvorrichtung 1 kann auch Regenwasser sammeln und der ersten Pflanzvorrichtung 101 und den Wasservorratsbehälter 124 zuführen.

Das wasserdichte Wasserführungssystem zum Transport von Wasser zwischen den Pflanzvorrichtungen führt zu einer besseren Wasserqualität und einer zusätzlichen Reduzierung des Wasserverbrauches, da die Wasserversorgung der Pflanzen hauptsächlich in der Erde unterhalb der Abdeckscheiben der Pflanzvorrichtungen in die Wasserbehälter erfolgt. Außerdem werden Ungleichheiten zwischen den Wasserständen der Wasserbecken der Pflanzvorrichtungen ausgeglichen.

Der Wasservorratsbehälter 124 umfasst eine Wasseraufbereitungsvorrichtung und eine Nährstoffzugabevorrichtung. Die Wasseraufbereitungsvorrichtung sorgt für eine gleichbleibende Wasserqualität. Über die Nährstoffzugabevorrichtung kann Düngemittel in das Wasser eingebracht werden.

Das im Wasservorratsbehälter 124 befindliche Wasser stellt ein Trägermedium einer Kältevorrichtung dar.

Das erfindungsgemäße Pflanzsystem 100 ist über das Wasserführungssystem und Wasser-Überlaufsystem mit einer dritten und vierten Pflanzvorrichtung 201 und 301 verbunden. Die Pflanzvorrichtungen 1, 201, 301 haben alle einen atmosphärischen Bereich 115 und arbeiten vorzugsweise nach einem ähnlichen Prinzip. Erfindungsgemäß können aber auch beliebige Pflanzvorrichtungen in das System integriert werden.

Das erfindungsgemäße Pflanzsystem 100 zeichnet sich durch einen äußerst geringen Wasserverbrauch aus, wobei überschüssiges Wasser recycelt und wiederverwendet werden kann.

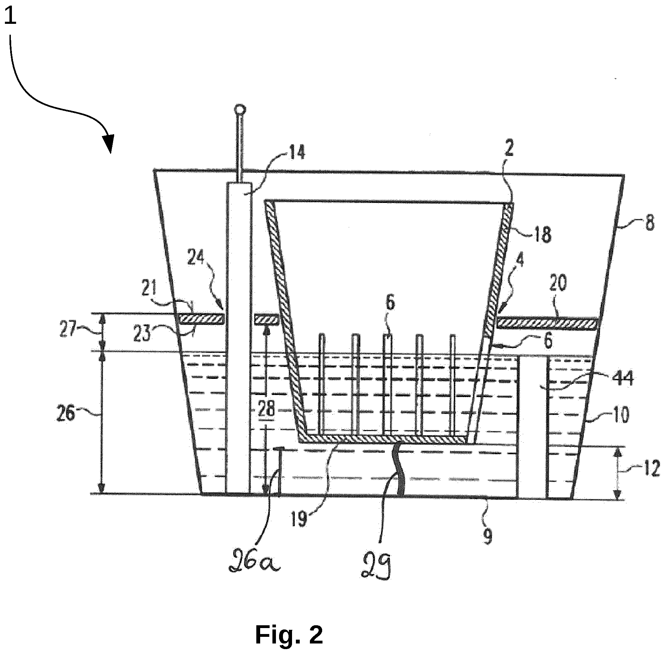

Fig. 2 zeigt eine schematische Detailansicht der zweiten Pflanzvorrichtung 1 aus dem Pflanzsystem 100 von Fig. 1. Die zweite Pflanzvorrichtung 1 nutzt ein ähnliches Prinzip wie Pflanzvorrichtung 101. Die zweite Pflanzvorrichtung 1 umfasst in dieser Ausführungsform ein Wasserbecken 8 mit einem vertikal angeordneten Wasser-Überlaufsystem 44, wobei das Wasser-Überlaufsystem 44 in dem Wasserbecken 8 einen Wasserpegel 26 von 13 cm einstellt, wobei in dem Wasserbecken 8 ein Moduleinsatz 20 oder Abdeckung 114' ausgebildet ist, in dem ein Kulturtopf 18 für eine Pflanze eingesetzt ist, wobei der Moduleinsatz 20 derart ausgebildet ist, dass zwischen einem Boden 9 des Wasserbeckens 8 und dem Moduleinsatz 20 ein Vegetationsraum 28 gebildet ist, der vom Wasserpegel und einem zwischen dem Wasserpegel und dem Moduleinsatz 20 ausgebildeten Atmosphären-Bereich 27 bzw. atmosphärischen Bereich 115 gebildet ist. Der Kulturtopf 18 weist einen Kulturtopfmantel und einen Kulturtopfboden 19 auf und der Kulturtopfboden 19 ist in einem Höhenabstand zu einem Boden 9 des Wasserbeckens 8 positioniert. Wasser wird mittels einer Pumpe aus einem Wasservorratsbehälter 124 unterhalb des Moduleinsatzes 20 bzw. unterhalb der Abdeckung 114 innerhalb der zweiten Pflanzvorrichtung 1 in das Wasserbecken 8 geführt. Wasser in dem Wasserbecken 8 der zweiten Pflanzvorrichtung 1 versorgt den Kulturtopf 18 und eine darin befindliche Pflanze in der zweiten Pflanzvorrichtung 1 mit Wasser. Überschüssiges Wasser wird über das Wasser-Überlaufsystem 44 in das Wasserbecken 102 der ersten Pflanzvorrichtung 101 geführt. Da weder in erster noch in zweiter Pflanzvorrichtung 1 bzw. 101 eine große Oberfläche zum Verdunsten von Wasser vorhanden ist, zeichnet sich dieses erfindungsgemäße Pflanzsystem 100 durch einen besonders geringen Wasserverbrauch aus.

### Bezugszeichenliste:

- 1: (zweite) Pflanzvorrichtung
- 8: Wasserbecken
- 9: Boden
- 18: Kulturtopf
- 19: Kulturtopfboden
- 20: Moduleinsatz
- 26: Wasserpegel (Nährstoffwurzelbereich)
- 27: Atmosphären-Bereich
- 28: Vegetationsraum (Wurzelvegetationsbereich)
- 44: Wasser-Überlaufsystem

- 100: Pflanzsystem
- 101: (erste/erfindungsgemäße) Pflanzvorrichtung
- 102: Wasserbecken
- 103: Boden (Wasserbecken)
- 104: Mantel (Wasserbecken)
- 105: Wasser-Überlaufsystem
- 107: Kulturtopf
- 108: Pflanze
- 109: Boden (Kulturtopf)
- 110: Mantel (Kulturtopf)
- 111: oberer Rand (Kulturtopf)
- 112: Durchgänge
- 113: Vegetationsraum (Nährstoffwurzelbereich)
- 114,114', 114": Abdeckung
- 115: atmosphärischer Bereich
- 116: Halteeinrichtung
- 117: Platte
- 118: Umwelt
- 119: Öffnung
- 120: Wartungstreppe
- 124: Wasservorratsbehälter
- 201: Dritte Pflanzvorrichtung
- 301: Vierte Pflanzvorrichtung

## Patentansprüche

1. Pflanzsystem (100), umfassend mindestens eine erste Pflanzvorrichtung (101) und mindestens eine zweite Pflanzvorrichtung (1), wobei mindestens die erste Pflanzvorrichtung (101) umfasst:
- ein Wasserbecken (102) mit einem Boden (103) und einem Mantel (104) zum Aufnehmen und Bereitstellen von Wasser;
- ein Wasser-Überlaufsystem (105) zum Einstellen eines Wasserstandes in dem Wasserbecken derart, dass höchstens 9/10 des Wasserbeckens mit Wasser befüllt ist;
- einen Kulturtopf (107) zur Aufnahme von Substrat und einer Pflanze (108), wobei der Kulturtopf mindestens einen Boden (109) und einen Mantel (110) umfasst, wobei der Mantel und der Boden zumindest teilweise perforiert ist bzw. sind;
- eine Abdeckung (114), die an oder im Wasserbecken (102) derart gehaltert ist, dass sich im Inneren des Wasserbeckens (102) ein atmosphärischer Bereich (115) ausbildet;
- eine Halteeinrichtung (116), die den Kulturtopf (107) an dem Mantel (104) des Wasserbeckens (102) derart befestigt und/oder gegenüber dem Boden (103) des Wasserbeckens (102) derart abstützt, dass der Boden (109) des Kulturtopfes (107) deutlich, insbesondere mindestens 3 cm, vom Boden (103) des Wasserbeckens (102) beabstandet ist,
wobei der abgeschlossene atmosphärische Bereich (115) zwischen Wasserstand und Abdeckung (114) gemeinsam mit dem Wasser zwischen dem Boden (103) des Wasserbeckens (102) und dem Wasserstand einen Vegetationsraum bildet,
wobei die Abdeckung (114) als Regenwasserkollektor ausgebildet ist, wobei ein Wasserführungssystem zum Transport von Wasser zwischen der ersten Pflanzvorrichtung (101) und der mindestens zweiten Pflanzvorrichtung (1) ausgebildet ist, wobei das Wasserbecken (102) aus Beton und/oder Stein gebildet ist.

2. Pflanzsystem (100) nach Anspruch 1,
**dadurch gekennzeichnet, dass**
das Wasserbecken (102) eine Länge von 0,5 m bis 4,0 m, bevorzugt 1,0 m bis 2,75 m, und/oder eine Breite von 0,2 m bis 4,0 m, bevorzugt 0,5 m bis 2,75 m, und/oder eine Höhe von 10 cm bis 3,0 m, bevorzugt 0,25 m bis 2,75 m, aufweist.

3. Pflanzsystem (100) nach Anspruch 1 oder 2,
**dadurch gekennzeichnet, dass**
die Abdeckung (114) des Wasserbeckens (102) mindestens eine Öffnung (119), bevorzugt eine kreisrunde Öffnung, und/oder einen Spalt, insbesondere zur Durchführung eines Teils der Pflanze (108), aufweist.

4. Pflanzsystem (100) nach einem der vorherigen Ansprüche,
**dadurch gekennzeichnet, dass**
sich die Abdeckung (114) in einer Ebene mit einem Rand des Kulturtopfes (107) oder in einer Ebene oberhalb des oberen Randes (111) des Kulturtopfes (107) befindet, und/oder
die Abdeckung (114) auf dem oberen Rand (111) des Kulturtopfes (107) aufliegt oder derart an dem Mantel (110) des Kulturtopfes (107) anschließt, dass der Mantel (110) des Kulturtopfes (107) zusammen mit der Abdeckung (114) den atmosphärischen Bereich (115) begrenzt.

5. Pflanzsystem (100) nach einem der vorherigen Ansprüche,
**dadurch gekennzeichnet, dass**
das Wasserbecken (102) eine Wartungstreppe (120) und/oder die Abdeckung (114) eine Öffnung (119) zum Betreten bzw. Besteigen des Wasserbeckens (102) aufweist.

6. Pflanzsystem (100) nach einem der vorherigen Ansprüche,
**dadurch gekennzeichnet, dass**
der Kulturtopf (107) zum Einsetzen des Kulturtopfes (107) in das Wasserbecken (102) und/oder zum Entnehmen des Kulturtopfes (107) aus dem Wasserbecken (102), insbesondere mittels Kran, Fixierungsmittel, insbesondere Ösen, aufweist.

7. Pflanzsystem (100) nach einem der vorherigen Ansprüche,
**dadurch gekennzeichnet, dass**
das Wasserbecken (102) zum Einsetzen des Wasserbeckens (102) in eine Grube im Erdreich und/oder zum Entnehmen des Wasserbeckens (102) aus einer Grube im Erdreich, insbesondere mittels Kran, optional Fixierungsmittel, insbesondere Ösen, aufweist.

8. Pflanzsystem (100) nach einem der vorherigen Ansprüche,
**dadurch gekennzeichnet, dass**
die Halteeinrichtung (116) Füße, optional höhenverstellbare Füße, umfasst, wobei die Länge der Füße derart bemessen sind, dass der Boden (109) des Kulturtopfes (107) deutlich, insbesondere mindestens 3 cm, vom Boden (103) des Wasserbeckens (102) beabstandet ist.

9. Pflanzsystem (100) nach einem der vorherigen Ansprüche,
**dadurch gekennzeichnet, dass**
die Halteeinrichtung mindestens eine Halterung, insbesondere einen Haken oder eine Kralle, zur Befestigung an dem Mantel (104) des Wasserbeckens (102) umfasst.

10. Pflanzsystem (100) nach einem der vorherigen Ansprüche,
**dadurch gekennzeichnet, dass**
das Wasserführungssystem einen Wasservorratsbehälter (124) umfasst, der vorzugsweise in einer Ebene unterhalb einer Bodenoberfläche, insbesondere zumindest teilweise unterhalb eines/des Wasserbeckens, angeordnet ist.

11. Pflanzsystem (100) nach Anspruch 10,
**dadurch gekennzeichnet, dass**
der Wasservorratsbehälter (124) vorzugsweise eine Wasseraufbereitungsvorrichtung und/oder Nährstoffzugabevorrichtung umfasst.

12. Pflanzsystem (100) nach Anspruch 10 oder 11,
**dadurch gekennzeichnet, dass**
das im Wasservorratsbehälter (124) befindliche Wasser ein Trägermedium einer Kälte- und/oder Wärmevorrichtung, insbesondere einer Sorptionskältemaschine und/oder einer Sorptionswärmemaschine, darstellt.

13. Pflanzsystem (100) nach einem der vorherigen Ansprüche,
**dadurch gekennzeichnet, dass**
das Wasserführungssystem Mittel aufweist, um
- aus einem Wasser-Überlaufsystem (44) der zweiten Pflanzvorrichtung (1) Wasser in das Wasserbecken (102) der ersten Pflanzvorrichtung (101) zu führen;
- aus dem Wasser-Überlaufsystem (105) der ersten Pflanzvorrichtung (101) Wasser in die zweite Pflanzvorrichtung (1) zu führen,
wobei optional zwischen dem Wasser-Überlaufsystem (105) der ersten Pflanzvorrichtung (101) und der zweiten Pflanzvorrichtung (1) ein Wasservorratsbehälter (124) geschaltet ist.

14. Pflanzsystem (100) nach einem der vorherigen Ansprüche,
**dadurch gekennzeichnet, dass**
die zweite Pflanzvorrichtung (1) umfasst:
ein Wasserbecken (8) mit einem Wasser-Überlaufsystem (44), wobei das Wasser-Überlaufsystem (44) in dem Wasserbecken (8) einen Wasserpegel (26) zwischen 5 cm - 25 cm, insbesondere von ca. 13 cm, einstellt, wobei in dem Wasserbecken (8) mindestens ein Moduleinsatz (20) ausgebildet ist, in dem eine Pflanze, insbesondere ein Kulturtopf (18), einsetzbar oder auf dem eine Vegetationsdecke einsetzbar ist, wobei der Moduleinsatz (20) derart ausgebildet ist, dass zwischen einem Boden (9) des Wasserbeckens (8) und dem Moduleinsatz (20) ein Vegetationsraum (28) gebildet ist, der vom Wasserpegel (26) und einem zwischen dem Wasserpegel (26) und dem Moduleinsatz (20) ausgebildeten Atmosphären-Bereich (27) gebildet ist.

## Claims

1. Planting system (100), comprising at least one first planting device (101) and at least one second planting device (1), wherein at least the first planting device (101) comprises:
- a water basin (102) having a bottom (103) and a jacket (104) for receiving and providing water;
- a water overflow system (105) for adjusting a water level in the water basin such that at most 9/10 of the water basin is filled with water;
- a cultivation pot (107) for accommodating substrate and a plant (108), wherein the cultivation pot comprises at least a bottom (109) and a jacket (110), wherein the jacket and the bottom are at least partially perforated;
- a cover (114) supported on or in the water basin (102) such that an atmospheric region (115) is formed inside the water basin (102);
- a holding device (116) which fixes the cultivation pot (107) to the jacket (104) of the water basin (102) and/or supports it relative to the bottom (103) of the water basin (102) in such a way that the bottom (109) of the cultivation pot (107) is clearly spaced, in particular at least 3 cm, from the bottom (103) of the water basin (102),
wherein the closed atmospheric region (115) between the water level and the cover (114) together with the water between the bottom (103) of the water basin (102) and the water level forms a vegetation space,
wherein the cover (114) is formed as a rainwater collector, wherein a water guidance system for transporting water between the first planting device (101) and the at least second planting device (1) is formed, wherein the water basin (102) is formed of concrete and/or stone.

2. Planting system (100) according to claim 1,
**characterized in that**
the water basin (102) has a length of 0.5 m to 4.0 m, preferably 1.0 m to 2.75 m, and/or a width of 0.2 m to 4.0 m, preferably 0.5 m to 2.75 m, and/or a height of 10 cm to 3.0 m, preferably 0.25 m to 2.75 m.

3. Planting system (100) according to claim 1 or 2,
**characterized in that**
the cover (114) of the water basin (102) comprises at least one opening (119), preferably a circular opening, and/or a gap, in particular for the passage of a part of the plant (108).

4. Planting system (100) according to one of the preceding claims,
**characterized in that**
the cover (114) is located in a plane with an edge of the cultivation pot (107) or in a plane above the upper edge (111) of the cultivation pot (107), and/or
the cover (114) rests on the upper edge (111) of the cultivation pot (107) or adjoins the jacket (110) of the cultivation pot (107) in such a way that the jacket (110) of the cultivation pot (107) together with the cover (114) delimits the atmospheric region (115).

5. Planting system (100) according to one of the preceding claims,
**characterized in that**
the water basin (102) comprises a maintenance stairway (120) and/or the cover (114) comprises an opening (119) for entering or climbing on the water basin (102).

6. Planting system (100) according to one of the preceding claims,
**characterized in that**
the cultivation pot (107) comprises fixing means, in particular eyelets, for inserting the cultivation pot (107) into the water basin (102) and/or for removing the cultivation pot (107) from the water basin (102), in particular by means of a crane.

7. Planting system (100) according to one of the previous claims,
**characterized in that**
the water basin (102) optionally comprises fixing means, in particular eyelets, for inserting the water basin (102) into a pit in the soil and/or for removing the water basin (102) from a pit in the soil, in particular by means of a crane.

8. Planting system (100) according to one of the preceding claims,
**characterized in that**
the holding device (116) comprises feet, optionally height-adjustable feet, wherein the length of the feet are dimensioned such that the bottom (109) of the cultivation pot (107) is clearly spaced, in particular at least 3 cm, from the bottom (103) of the water basin (102).

9. Planting system (100) according to one of the preceding claims,
**characterized in that**
the holding device comprises at least one holder, in particular a hook or a claw, for attachment to the jacket (104) of the water basin (102).

10. Planting system (100) according to one of the preceding claims,
**characterized in that**
the water guidance system comprises a water storage tank (124) preferably arranged in a plane below a ground surface, in particular at least partially below a/the water basin.

11. Planting system (100) according to claim 10,
**characterized in that**
the water storage tank (124) preferably comprises a water treatment device and/or nutrient addition device.

12. Planting system (100) according to claim 10 or 11,
**characterized in that**
the water located in the water storage tank (124) constitutes a carrier medium of a refrigeration and/or heating device, in particular a sorption refrigeration machine and/or a sorption heating machine.

13. Planting system (100) according to one of the preceding claims,
**characterized in that**
the water management system comprises means in order
- to guide water from a water overflow system (44) of the second planting device (1) into the water basin (102) of the first planting device (101);
- to guide water from the water overflow system (105) of the first planting device (101) into the second planting device (1),
wherein optionally a water storage tank (124) is connected between the water overflow system (105) of the first planting device (101) and the second planting device (1).

14. Planting system (100) according to one of the preceding claims,
**characterized in that**
the second planting device (1) comprises:
a water basin (8) having a water overflow system (44), wherein the water overflow system (44) sets a water level (26) in the water basin (8) of between 5 cm-25 cm, in particular of about 13 cm, wherein at least one module insert (20) is formed in the water basin (8), in which a plant, in particular a cultivation pot (18), can be inserted or on which a vegetation cover can be inserted, wherein the module insert (20) is formed in such a way that between a bottom (9) of the water basin (8) and the module insert (20) a vegetation space (28) is formed, which is formed by the water level (26) and an atmospheric region (27) formed between the water level (26) and the module insert (20).

## Revendications

1. Système de plantation (100) comprenant au moins un premier dispositif de plantation (101) et au moins un deuxième dispositif de plantation (1), dans lequel au moins le premier dispositif de plantation (101) comprend :
- un bassin d'eau (102) avec un fond (103) et une enveloppe (104), destiné à recevoir et mettre à disposition de l'eau ;
- un système de trop-plein d'eau (105) destiné à ajuster le niveau d'eau dans le bassin d'eau de telle sorte qu'au maximum les 9/10 du bassin d'eau soient remplis d'eau ;
- un pot de culture (107) destiné à recevoir un substrat et une plante (108), le pot de culture comprenant au moins un fond (109) et une enveloppe (110), l'enveloppe et le fond étant au moins partiellement perforés ;
- un couvercle (114) qui est maintenu sur ou dans le bassin d'eau (102) de telle sorte qu'une zone atmosphérique (115) se forme à l'intérieur du bassin d'eau (102) ;
- un moyen de maintien (116) qui fixe le pot de culture (107) à l'enveloppe (104) du bassin d'eau (102) et/ou le soutient par rapport au fond (103) du bassin d'eau (102) de telle sorte que le fond (109) du pot de culture (107) soit nettement distant, en particulier d'au moins 3 cm, du fond (103) du bassin d'eau (102),
la zone atmosphérique fermée (115) entre le niveau d'eau et le couvercle (114) formant, avec l'eau entre le fond (103) du bassin d'eau (102) et le niveau d'eau, un espace de végétation,
le couvercle (114) étant conçu comme un collecteur d'eau de pluie, un système de conduite d'eau étant conçu pour transporter de l'eau entre le premier dispositif de plantation (101) et ledit au moins deuxième dispositif de plantation (1), le bassin d'eau (102) étant formé de béton et/ou de pierre.

2. Système de plantation (100) selon la revendication 1,
**caractérisé en ce que**
le bassin d'eau (102) présente une longueur de 0,5 m à 4,0 m, de préférence de 1,0 m à 2,75 m, et/ou une largeur de 0,2 m à 4,0 m, de préférence de 0,5 m à 2,75 m, et/ou une hauteur de 10 cm à 3,0 m, de préférence de 0,25 m à 2,75 m.

3. Système de plantation (100) selon la revendication 1 ou 2,
**caractérisé en ce que**
le couvercle (114) du bassin d'eau (102) présente au moins une ouverture (119), de préférence une ouverture circulaire, et/ou une fente, en particulier pour le passage d'une partie de la plante (108).

4. Système de plantation (100) selon l'une des revendications précédentes,
**caractérisé en ce que**
le couvercle (114) est situé dans un même plan qu'un bord du pot de culture (107) ou dans un plan situé au-dessus du bord supérieur (111) du pot de culture (107), et/ou
le couvercle (114) repose sur le bord supérieur (111) du pot de culture (107) ou se raccorde à l'enveloppe (110) du pot de culture (107) de telle sorte que l'enveloppe (110) du pot de culture (107) délimite, avec le couvercle (114), la zone atmosphérique (115).

5. Système de plantation (100) selon l'une des revendications précédentes,
**caractérisé en ce que**
le bassin d'eau (102) présente un escalier de maintenance (120) et/ou le couvercle (114) présente une ouverture (119) pour entrer ou monter dans le bassin d'eau (102).

6. Système de plantation (100) selon l'une des revendications précédentes,
**caractérisé en ce que**
le pot de culture (107) présente des moyens de fixation, en particulier des oeillets, pour insérer le pot de culture (107) dans le bassin d'eau (102) et/ou pour retirer le pot de culture (107) du bassin d'eau (102), en particulier au moyen d'une grue.

7. Système de plantation (100) selon l'une des revendications précédentes,
**caractérisé en ce que**
le bassin d'eau (102) présente en option des moyens de fixation, en particulier des oeillets, pour insérer le bassin d'eau (102) dans une fosse dans le sol et/ou pour retirer le bassin d'eau (102) d'une fosse dans le sol, en particulier au moyen d'une grue.

8. Système de plantation (100) selon l'une des revendications précédentes,
**caractérisé en ce que**
le moyen de maintien (116) comprend des pieds, en option réglables en hauteur, la longueur des pieds étant dimensionnée de telle sorte que le fond (109) du pot de culture (107) soit nettement distant, en particulier d'au moins 3 cm, du fond (103) du bassin d'eau (102).

9. Système de plantation (100) selon l'une des revendications précédentes,
**caractérisé en ce que**
le moyen de maintien comprend au moins un élément de fixation, en particulier un crochet ou une griffe, destiné à être fixé à l'enveloppe (104) du bassin d'eau (102).

10. Système de plantation (100) selon l'une des revendications précédentes,
**caractérisé en ce que**
le système de conduite d'eau comprend un réservoir d'eau (124), qui est de préférence disposé dans un plan situé en dessous d'une surface de sol, en particulier au moins partiellement en dessous d'un/du bassin d'eau.

11. Système de plantation (100) selon la revendication 10,
**caractérisé en ce que**
le réservoir d'eau (124) comprend de préférence un dispositif de traitement d'eau et/ou un dispositif d'apport de nutriments.

12. Système de plantation (100) selon la revendication 10 ou 11,
**caractérisé en ce que**
l'eau se trouvant dans le réservoir d'eau (124) constitue un milieu porteur d'un dispositif de réfrigération et/ou de chauffage, en particulier d'une machine frigorifique à sorption et/ou d'une machine thermique à sorption.

13. Système de plantation (100) selon l'une des revendications précédentes,
**caractérisé en ce que**
le système de conduite d'eau présente des moyens pour
- conduire de l'eau depuis un système de trop-plein d'eau (44) du deuxième dispositif de plantation (1) vers le bassin d'eau (102) du premier dispositif de plantation (101) ;
- conduire de l'eau depuis le système de trop-plein d'eau (105) du premier dispositif de plantation (101) vers le deuxième dispositif de plantation (1),
dans lequel, en option, un réservoir d'eau (124) est monté entre le système de trop-plein d'eau (105) du premier dispositif de plantation (101) et le deuxième dispositif de plantation (1).

14. Système de plantation (100) selon l'une des revendications précédentes,
**caractérisé en ce que**
le deuxième dispositif de plantation (1) comprend :
un bassin d'eau (8) avec un système de trop-plein d'eau (44), le système de trop-plein d'eau (44) ajustant dans le bassin d'eau (8) un niveau d'eau (26) compris entre 5 cm et 25 cm, en particulier d'environ 13 cm, au moins un insert modulaire (20) étant formé dans le bassin d'eau (8), dans lequel une plante, en particulier un pot de culture (18), peut être inséré ou sur lequel une couverture de végétation peut être insérée, l'insert modulaire (20) étant conçu de telle sorte qu'entre un fond (9) du bassin d'eau (8) et l'insert modulaire (20) soit formé un espace de végétation (28) qui est formé par le niveau d'eau (26) et une zone d'atmosphère (27) formée entre le niveau d'eau (26) et l'insert modulaire (20).
